# EUROPEAN PATENT APPLICATION

(11) **EP 1 624 120 A2**
(43) Date of publication of application: **08.02.2006**
(21) Application number: 05107092.8
(22) Date of filing: 01.08.2005
(51) Int. Cl.: E04B 1/66

(54) **Multilayer sheath particularly for insulating walls and lofts of buildings**

(30) Priority: 05.08.2004 IT TV20040095
(71) Applicant: SILCART S.r.l., 31030 Carbonera - Frazione Mignagola (Prov. of Treviso) (IT)
(72) Inventor: Faotto, Ugo, 31100 Treviso (IT)
(74) Representative: Modiano, Micaela Nadia

(57) **Abstract**

A multilayer sheath (1), particularly for insulating walls and lofts of buildings, comprising a first lower protective layer (2) and a second upper protective layer (3), which are impermeable to water and water vapor, and between which there are means (5), which can be activated upon contact with water or water vapor, that are adapted to restore the waterproofness of the sheath (1) at discontinuities or damaged regions of the first or second protective layers (2, 3).

## Description

The present invention relates to a multilayer sheath particularly for insulating walls and lofts of buildings.

In the manufacture of roofs, walls, floor slabs, foundations and other structural elements of a building, it is often necessary to be able to insert insulating elements that are capable of making said elements impermeable to water and water vapor and of ensuring good heat insulation.

The insulating elements that are commonly used are constituted by known types of sheath, arranged on boarding, generally made of wood, which is arranged under the tiles of the roof, or within appropriately provided spaces inside walls, floor slabs or foundations.

The structures of buildings are currently insulated by using known types of sheath composed of a first protective layer and a second protective layer, which are permeable to water and water vapor and between which an insulating element is interposed which is constituted by a layer made for example of natural or synthetic films that are impermeable to water and water vapor.

The main drawback of these known types of waterproofing sheath is that if they are damaged during use or laying, they can lose their waterproofing properties at the points damaged for example as a consequence of tearing, due to the lack of structural continuity of the waterproof elements of said sheath.

At such damaged points, therefore, infiltrations of water or humidity may occur, constituting a severe threat to the integrity of the structural elements protected by said sheath.

A second known type of sheath, used in particular to waterproof the foundations of buildings erected on water tables, is constituted by a plurality of layers, all of which are permeable to water and between which there is a layer that includes bentonite materials, which have the property of increasing their volume considerably upon contact with water.

This second known type of sheath is thus wet with water after being installed between two castings of concrete, so that since its expansion is limited by said concrete it adheres to it with intense pressure, so as to act as a sealing gasket.

The main drawback of this second known type of sheath is that it is difficult to use in insulating elements that are only rarely in contact with water, such as for example the walls of buildings or lofts, since an environment that is not sufficiently humid would rapidly lead to its dehydration, causing cracks and flaking of said sheath.

The aim of the present invention is to solve the above-mentioned problems, eliminating the drawbacks of the cited background art, by providing a multilayer sheath that allows to ensure the waterproofing of a structural element of a building even after it has suffered damage, such as for example piercing, cutting, tearing or incisions.

Within this aim, an object of the invention is to provide a multilayer sheath that allows to restore the original waterproofing properties in a fully automatic manner.

Another object is to provide a multilayer sheath that is structurally simple and has low manufacturing costs.

This aim and these objects, as well as others that will become better apparent hereinafter, are achieved by a multilayer sheath, particularly for waterproofing walls and lofts of buildings, which comprises a first lower protective layer and a second upper protective layer, which are impermeable to water and water vapor, characterized in that between said first and second protective layers there are means, which can be activated upon contact with water or water vapor, that are adapted to restore the waterproofness of said sheath at discontinuities or damaged regions of said first or second protective layers.

Further characteristics and advantages of the invention will become better apparent from the following detailed description of a particular but not exclusive embodiment thereof, illustrated by way of non-limiting example in the accompanying drawings, wherein:

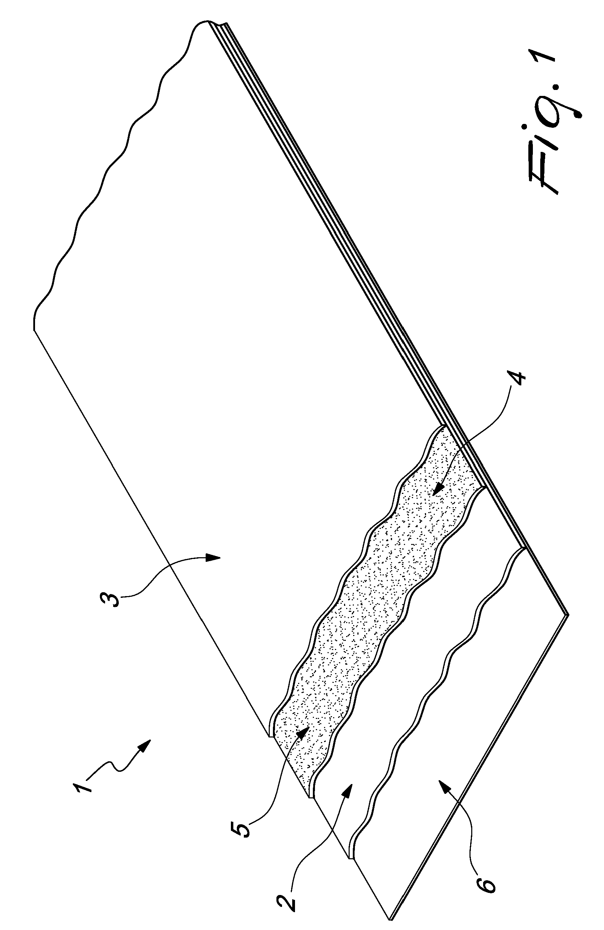

Figure 1 is a perspective view of a sheath according to the invention.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figure, the reference numeral 1 designates a multilayer sheath according to the invention, which comprises a first lower protective layer 2, and a second upper protective layer 3, which have approximately the same extension and are both impermeable to water and water vapor.

The first and second protective layers 2 and 3 impermeable to water and vapor can each be constituted by a sheet made for example of the material known as "non-woven fabric" based on polypropylene or polyester, natural or synthetic or composite material, or fabric made of natural, synthetic or composite fibers, natural, synthetic or composite films, and may be provided with known types of treatment, such as for example flame-retardant treatments, fireproofing treatment, water-repellent treatments or ultraviolet ray shielding treatments.

At least one insulating element 4 is interposed between the first and second protective layers and is preferably shaped like a sheet; the insulating element is normally not in contact with the outside, as it is protected by the first and second impermeable protective layers.

As an alternative, the first protective layer 2 can be replaced by a waterproofing protective treatment applied to the lower surface of the insulating element 4.

The insulating element 4 is constituted advantageously by at least one sheet made of synthetic materials, such as polypropylene, polyethylene, polyester, natural or composite materials, or fabric made of natural, synthetic or composite fibers, or non-woven fabric, and may have good thermal insulation or soundproofing characteristics.

Means that can be activated upon contact with water or water vapor in order to restore the waterproofness of the sheath at discontinuities or damaged regions of said first or second protective layers, as a consequence of the use or laying thereof, are associated with the insulating element 4.

The waterproofness restoring means are constituted advantageously by a dispersion 5, provided within the insulating element 4 for example in the form of powder or granules, of a material that is solid in a dry environment and is capable of becoming an impermeable gel or of producing an impermeable film once it has made contact with water or water vapor.

Advantageously, the transformation into a gel or the creation of a protective film can occur even without a significant increase in volume of the dispersion in the region affected by the damage; waterproofness can in fact be restored by means of the localized generation of a protective membrane, constituted by said gel or film, which is capable of stopping water infiltrations that might occur at discontinuities accidentally present in one or both of the impermeable protective layers.

Such dispersion can be applied to the insulating element 4, for example in the form of powder or granules, on one or both faces thereof, or can be incorporated within an adhesive or a resin that is spread subsequently on one or both faces of the insulating element or is injected inside it.

As an alternative, the dispersion 5 can be incorporated directly inside the insulating element 4 during its production, or injected between the insulating element 4 and the first and second protective layers 2 and 3 during their coupling.

Advantageously, the material used to provide the dispersion 5 can be constituted by a compound known by the trade name SAP, marketed by the companies Tillmans and Creavis Technology & Innovation, or by other natural or synthetic materials that gel or polymerize upon contact with water or water vapor, optionally manufactured by means of nanotechnologies.

Optionally, the dispersion 5 can also contain fireproof or flame-retardant elements.

It is further possible to interpose, between the first protective layer 2 and the second protective layer 3 and the insulating element 4, additional layers, constituted for example by sheets made of materials that have fire-retardant properties or by reinforcement nets.

Externally with respect to the first protective layer 2, it is further possible to couple an element for absorbing condensation 6, which is constituted for example by a layer made of fabric or non-woven fabric or felt or by a mat made of synthetic, natural or composite fiber.

The operation of the multilayer sheath according to the invention therefore entails that when the first and second protective layers are intact and have no discontinuities, they give the sheath the intended waterproofing properties.

In these conditions, the dispersion 5 that is present inside the sheath in a dry environment that is insulated from water and water vapor remains in the solid state, for example in the form of powder or granules, or is incorporated within an adhesive or a resin that is spread on the insulating element or injected inside it.

If the first protective layer or the second protective layer are damaged, for example during the laying of the sheath or during its use, any infiltration of water or water vapor inside it causes the conversion, limited to the region affected by the damage, of the dispersion 5 into a gel or a protective film.

Said protective film or gel conveniently has a continuous structure that is impermeable to water or water vapor, so as to constitute, in the region affected by the damage of the first or second protective layers, a barrier against infiltrations, which compensates for the lack of continuity of said protective layers.

The conversion of the material that constitutes the dispersion 5 into a gel or film remains confined only to the region affected for example by the tear, laceration or piercing of the first and/or second protective layers; therefore, if further damage of the sheath occurred in regions different from the one affected by the first damage, another fraction of the dispersion 5 would be converted into a gel or film proximate to the new regions, ensuring the overall waterproofing of the sheath.

In this manner, the sheath can retain its properties of insulation against water and water vapor even if it is damaged repeatedly in different regions.

Further, restoring the waterproofness of the sheath occurs completely automatically and in a manner that is confined only to the region affected by the damage.

It has thus been found that the invention has achieved the intended aim and objects, a sheath having been provided which is capable of ensuring the waterproofing of a structural element of a building even after it has undergone damage, such as for example piercing, cuts, tearing or incisions.

Another object achieved by the invention is to allow to restore the original waterproofing properties in a fully automatic manner.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics described as advantageous, convenient or the like may also be omitted or be replaced with equivalents.

The disclosures in Italian Patent Application No. TV2004A000095 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multilayer sheath, particularly for waterproofing walls and lofts of buildings, comprising a first lower protective layer and a second upper protective layer, which are impermeable to water and water vapor, **characterized in that** between said first and second protective layers there are means, which can be activated upon contact with water or water vapor, that are adapted to restore the waterproofness of said sheath at discontinuities or damaged regions of said first or second protective layers.

2. A multilayer sheath, particularly for waterproofing walls and lofts of buildings, comprising a first lower protective layer and a second upper protective layer, which are impermeable to water and water vapor, between which an insulating element that is normally not in contact with water or water vapor is interposed, **characterized in that** between said first and/or second protective layers and said insulating element there are means, which can be activated upon contact with water or water vapor, that are suitable to restore the waterproofness of said sheath at discontinuities or damaged regions of said first or second protective layers.

3. A multilayer sheath, particularly for waterproofing walls and lofts of buildings, comprising a first lower protective layer and a second upper protective layer, which are impermeable to water and water vapor, between which an insulating element that is normally not in contact with water or water vapor is interposed, **characterized in that** said insulating element contains means, which can be activated upon contact with water or water vapor, that are suitable to restore the waterproofness of said sheath at discontinuities or damaged regions of said first or second protective layers.

4. The multilayer sheath according to claims 1 or 2 or 3, **characterized in that** said first and second protective layers, which are impermeable to water and water vapor, are each constituted by a sheet made of a material known as "non-woven fabric" based on polypropylene or polyester, made of natural, synthetic or composite material, provided with treatments for making it impermeable to water and water vapor, or made of fabric obtained from natural, synthetic or composite fibers provided with treatments for making it impermeable to water and water vapor, natural, synthetic or composite films that are impermeable to water and water vapor.

5. The multilayer sheath according to claims 2 or 3, **characterized in that** said first protective layer is constituted by a protective treatment that is applied to the lower surface of said insulating element, said second protective layer being constituted by a sheet made of non-woven fabric based on polypropylene or polyester, made of natural, synthetic or composite material, provided with treatments for making it impermeable to water and water vapor, or made of fabric obtained from natural, synthetic or composite fibers and provided with treatments for making it impermeable to water and water vapor, natural, synthetic or composite films that are impermeable to water and water vapor.

6. The multilayer sheath according to one or more of the preceding claims, **characterized in that** said first and second protective layers have flame-retardant treatments, fire-retardant treatments, water-repellent treatments or treatments for shielding ultraviolet rays.

7. The multilayer sheath according to one or more of the preceding claims, **characterized in that** said insulating element is shaped like a sheet and is made of synthetic materials such as polypropylene, polyethylene, polyester, natural or composite materials, or fabric made of natural, synthetic or composite fibers, or non-woven fabric, and optionally has chosen thermal or acoustic insulation characteristics.

8. The multilayer sheath according to one or more of the preceding claims, **characterized in that** said means suitable for restoring waterproofness are constituted by a dispersion, preferably in the form of powder or granules, of a material that is in the solid state in a dry environment and is capable of becoming a gel or of producing a protective film once it has made contact with water or water vapor.

9. The multilayer sheath according to claims 1 or 2 or 3 and 8, **characterized in that** the conversion into gel or film of said dispersion occurs without a significant increase in its volume.

10. The multilayer sheath according to claims 3 and 9, **characterized in that** said dispersion is incorporated within said insulating element, preferably during the production of said element, or is incorporated within an adhesive or a resin injected inside said insulating element.

11. The multilayer sheath according to claims 2 and 9, **characterized in that** said dispersion is applied to said insulating element in the form of powder or granules on one or both faces thereof or is incorporated within an adhesive or resin that is subsequently spread onto one or both of the faces of said insulating element or is injected between said insulating element and said first and second protective layers during their coupling.

12. The multilayer sheath according to one or more of the preceding claims, **characterized in that** the material used to provide said dispersion is constituted by a compound known by the trade name "SAP", or by materials that gel or polymerize upon contact with water or water vapor, optionally manufactured by means of nanotechnologies.

13. The multilayer sheath according to one or more of the preceding claims, **characterized in that** said dispersion contains fire-retardant or flame-retardant elements.

14. The multilayer sheath according to one or more of the preceding claims, **characterized in that** additional layers are interposed between said first and second protective layers and said insulating element and are constituted by sheets made of materials that have fire-retardant properties or by reinforcement nets.

15. The multilayer sheath according to one or more of the preceding claims, **characterized in that** a condensation absorbing element is coupled externally with respect to said first protective layer and is constituted by a layer made of fabric or non-woven fabric or felt or by a mat made of synthetic, natural or composite fiber.
